Europäisches Patentamt

European Patent Office

Office européen des brevets

(11) Publication number: **0 488 492 A2**

# EUROPEAN PATENT APPLICATION

(21) Application number: **91305329.4**

(51) Int. Cl.5: **G06F 7/58**

(22) Date of filing: **12.06.91**

(30) Priority: **30.11.90 US 620106**

(43) Date of publication of application:
**03.06.92 Bulletin 92/23**

(84) Designated Contracting States:
**AT BE CH DE DK ES FR GB IT LI NL SE**

(71) Applicant: **DIGITAL EOUIPMENT
CORPORATION
111 Powdermill Road
Maynard Massachusetts 01754-1418(US)**

(72) Inventor: **Callas, Jonathan David
26 Walkeridge Drive
Nashua, New Hampshire 03062(US)**
Inventor: **Piper, Derrell Duane, 111
163 Indian Rock Village
Merrimack, New Hampshire 03054(US)**

(74) Representative: **Goodman, Christopher et al
Eric Potter & Clarkson St. Mary's Court St.
Mary's Gate
Nottingham NG1 1LE(GB)**

(54) **Random character generator.**

(57) A random character generator in a data processing system for generating a group of characters based upon a rules database. A system and method for generating the rules database are disclosed by processing an input database containing, for example, a dictionary of words. The rules database contains information relating to the structure of the data in the input database. Also disclosed is a system and method for randomly generating a group of characters based upon the information stored in the rules database. The group of characters is randomly constructed on a character-by-character basis. Each new character added to the group is selected from the rules database based upon the previous characters in the group. The preferred embodiment generates passwords for use in a data processing system which are both memorable and secure.

System Configuration

Fig. 1

## BACKGROUND OF THE INVENTION

Field of the Invention

The present invention relates to a data processing system which generates groups of random characters, and more particularly to a data processing system which generates random words with a high degree of randomness and which are memorable.

Description of the Related Art

Conventional systems generate random groups of characters for various uses. Such random groups of characters may be used as a random file name needed by a process executing in a data processing system. For example, a process in a data processing system may require various random groups of characters to designate specific files or memory locations which are used during execution of the process.

Also, conventional systems may generate random groups of characters for use as passwords in a data processing system. The use of passwords in data processing systems is widespread and provides authentication for users of a data processing system. For example, a password in the form of a Personal Identification Number (PIN) is commonly used to access various banking accounts in Automatic Teller Machines (ATMs). Passwords are also conventionally used to authenticate users of data processing systems, such as office computing systems and commercial database information systems. Passwords are intended to be known only by the authentic user of the data processing system, and usually are not disclosed to other persons.

However, the security of various data processing systems remains an increasing problem. Security failures are extremely undesirable and may have detrimental financial and personal consequences. The theft of services from commercial database systems, or the alteration of data stored in other data processing systems are examples of security failures. Also, the unauthorized access of data in data processing systems may allow business competitors to gain unfair advantage. Finally, a security failure in a data processing system containing sensitive national security information may have grave consequences.

The unauthorized access to data processing systems is made easier when these systems may be accessed over phone lines or other networks. The convenience provided by this widespread accessibility assures that virtually anyone may attempt to access most major data processing systems from anywhere in the world.

Frequently, unauthorized users attempt to access data processing systems by implementing various computer generated attempts to guess a password. The unauthorized user may initiate activities which will rapidly try a large number of possible passwords. The unauthorized user may, for example, implement an automatic computer algorithm which attempts to find a valid password by trying every word in a dictionary. Such an algorithm may be simply and easily designed.

Some conventional data processing systems allow an authentic user to select a desired password. However, this system does not provide a high level of security. Such user-selected passwords are often easy to guess. Commonly, users will designate such information as birth dates, family names, social security numbers, or other familiar words or character groups as their passwords. This information is generally publicly available and, therefore, may be easily discovered by a potential unauthorized user. In a data processing system with a large number of authorized users, a potential unauthorized user, equipped with this publicly available information for each user, has a good chance of correctly guessing a password.

In an attempt to overcome the problems associated with user-selected passwords, other conventional systems assign passwords to the various users. Some conventional systems assign passwords consisting of completely random alphanumeric strings. With such systems, any desired level of password randomness, and commensurate security, can be achieved. However, the most random password, *i.e.*, a completely random alphanumeric string, is often very difficult for a user to remember. Therefore, such random alphanumeric strings must often be written down and carried with the user. This conventional system suffers from the problem that the written record of a password may be lost or otherwise discovered by potential unauthorized users.

Still other conventional systems assign passwords that are actual words. This approach improves the memorability of the password. The password will be memorable because the user will usually be familiar with the assigned password, or the assigned password will be pronounceable by the user.

However, this approach suffers from the drawback that the data processing system must select the assigned passwords from a sufficiently large set of actual words to provide the required security level. Often, the desired level of security will require that the data processing system select the assigned passwords from a very large database containing actual words. The very large database for storing the possible assigned passwords will undesirably require a large computer memory space. Furthermore, in some systems, the level of randomness provided by even the largest set of actual words, *i.e.*, the complete list of words in an unabridged dictionary, may not be sufficient to provide adequate security.

Yet another conventional system has attempted to overcome the problems of the above-described systems by randomly generating pronounceable strings of characters that are not necessarily actual words. This system randomly combines various phonetic groups, such as syllables, to form the pronounceable strings of characters.

However, this conventional system suffers from many drawbacks. For example, the conventional system which attempts to randomly combine phonetic groups must follow the various spelling and pronunciation rules of the language to produce a pronounceable string of characters. Determination of these rules is often an arduous task. Furthermore, in the English language, for example, the various pronunciation and spelling rules and conventions are riddled with exceptions.

It is impractical for this conventional system to incorporate every possible rule and its various exceptions. Therefore, this system will generate words that do not follow the conventions and rules of the language and are, therefore, undesirably difficult to remember and pronounce. Finally, since each language, and even various dialects within a language, usually have radically different pronunciation and spelling rules and conventions, this conventional system suffers from the drawback that it must be redesigned for each language or dialect of the users of the data processing system.

## SUMMARY OF THE INVENTION

The present invention has been made in view of the above circumstances has as an object to provide a rule generation system and method which processes an input database containing actual words to generate a rules database containing data relating to the construction of the words contained in the input database.

It is another object of the present invention to provide a rule generation system and method which can process an input database which contains actual words in any known language to generate a rules database.

It is another object of the invention to provide a system and method for generating a group of characters based upon the rules contained in a rules database.

Yet another object of the present invention is to provide a random word generator system and method which are easily remembered by a user and which are pronounceable by the user.

Yet another object of the present invention is to provide a random word generator system and method which generate a random group of characters with a measured degree of randomness or, in other words, a measured information content.

Still a further object of the present invention is to provide a random word generator system and method which can generate a random group of characters in any known language.

Additional objects and advantages of the invention will be set forth in part in the description which follows and in part will be obvious from the description, or may be learned by practice of the invention. The objects and advantages of the invention may be realized and attained by means of the instrumentalities and combinations particularly pointed out in the appended claims.

To achieve the objects and in accordance with the purposes of the invention, as embodied and broadly described herein, the method for generating a rules database by processing an input database in a data processing system, the input database containing a plurality of groups of characters comprises the steps of selecting a subgroup of consecutive characters from a group of characters stored in the input database, incrementing a value stored in the rules database that represents a number of times said subgroup begins a group of characters if said selected subgroup is the initial subgroup in said group, incrementing a value stored in the rules database that represents a number of times said subgroup has occurred, storing a character in said group that follows said subgroup, in a list of characters that may follow said subgroup, said list being stored in the rules database, and incrementing a value stored in the rules database that represents a number of times said character follows said subgroup.

To achieve the objects and in accordance with the purposes of the invention, as embodied and broadly described herein, the data processing system for generating a rules database of this invention comprises an input database means containing a plurality of groups of characters, and, a processing means, connected to said input database means, for storing in the rules database a plurality of unique subgroups of consecutive characters contained in said input database, the total number of occurrences of each unique subgroup of consecutive characters in said input database means, the total number of times each unique subgroup of consecutive characters begins a group, a list of all of the characters that follow each unique subgroup of consecutive characters, and the total number of times a character follows a unique subgroup of consecutive characters.

To achieve the objects and in accordance with the purposes of the invention, as embodied and broadly described herein, the method in a data processing system for adding a character to a group of characters based upon a rules database of this invention comprises the steps of reading a current subgroup of characters in the group of characters, selecting a next character from one of a plurality of lists of possible next characters, each list being associated with a unique subgroup of characters, wherein said list is associated with said current subgroup of characters, and adding the selected character to the group of characters.

To achieve the objects and in accordance with the purposes of the invention, as embodied and broadly described herein, the data processing system for randomly generating a group of characters of this invention comprises a rules database means for storing subgroups of characters, a list of possible next characters associated with each subgroup of characters, and a likelihood of occurrence for each next character, and a processing means, connected to said rules database means, for generating a group of characters by repeatedly selecting a next character from the list of possible next characters according to the likelihood of occurrence.

To achieve the objects and in accordance with the purposes of the invention, as embodied and broadly described herein, the method in a data processing system for generating a group of characters based upon a rules database of this invention comprises the steps of selecting an initial pair of characters from a first list of unique pairs of characters that may begin a group of characters, said first list stored in the rules database, said initial pair comprised of a first character and a second character, selecting a third character from a second list of characters that may follow said initial pair, said second list stored in the rules database, said second character and said third character comprising a second pair, selecting a fourth character from a third list of characters that may follow said second pair, said third list stored in said rules database.

To achieve the objects and in accordance with the purposes of the invention, as embodied and broadly described herein, the method in a data processing system for adding a character with a measured degree of randomness to a group of characters based upon a rules database comprises the steps of reading a current subgroup of characters in the group of characters, selecting a next character from one of a plurality of lists of possible next characters, each list being associated with a unique subgroup of characters, wherein said list is associated with said current subgroup of characters, calculating a degree of randomness associated with said next character, and adding said selected next character to the group of characters.

## BRIEF DESCRIPTION OF THE DRAWINGS

The accompanying drawings, which are incorporated in and constitute a part of this specification illustrate embodiments of the invention and, together with the description, serve to explain the objects, advantages and principles of the invention. In the drawings,

Fig. 1 is a block diagram of the system configuration in accordance with the present invention;

Fig. 2(a) is a diagram showing a data structure of an input database in accordance with the present invention;

Fig. 2(b) is a diagram showing a data structure of a rules database in accordance with the present invention;

Fig. 3 is a flowchart showing a rule generation algorithm in accordance with the present invention;

Fig. 4 is a flowchart showing a group generation algorithm in accordance with the present invention; and

Fig. 5 is a flowchart showing a post-generation filtering algorithm in accordance with the present invention.

## DETAILED DESCRIPTION OF THE PREFERRED EMBODIMENTS

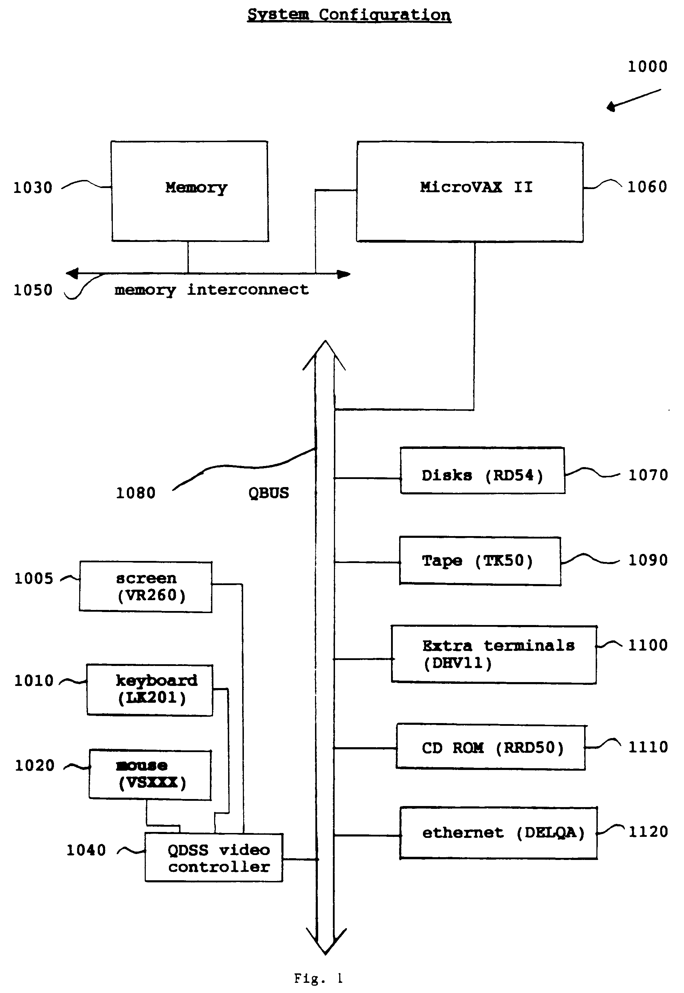

Referring to Fig. 1, a data processing system 1000 according to the present invention is shown. The preferred model numbers of DIGITAL EQUIPMENT CORPORATION (hereinafter "DEC," both being a trademark of Digital Equipment Corporation, Maynard, MA) equipment are shown in parenthesis following the description of several blocks in Fig. 1. The data processing system 1000 includes a screen 1005, a keyboard 1010, and a mouse 1020, each of which may be used by a user of the data processing system to communicate with the data processing system 1000.

A QDSS video controller 1040 is connected to the screen 1005, the keyboard 1010, and the mouse 1020. QDSS stands for QBUS Dragon Subsystem (QBUS is a trademark of DEC, Maynard, MA). The QDSS

4

video controller 1040 receives input from the keyboard 1010 and the mouse 1020 and appropriately controls the output on the screen 1005.

The QDSS video controller 1040 is connected to a QBUS peripheral bus 1080. Connected to a memory interconnect bus 1050 is a memory 1030 and a MicroVAX II 1060 (MicroVAX and VAX are trademarks of DEC, Maynard, MA). The memory interconnect bus 1050 transfers data between the memory 1030 and the MicroVAX II 1060.

The memory 1030 may be any memory which is suitable for use in the system 1000. Further, the amount of memory available in the memory 1030 will be largely determined by the intended applications and the memory requirements of the particular system utilized.

The MicroVAX II 1060 is a central processing unit for the system 1000 shown in Fig. 1. The MicroVAX II 1060 is also connected to a QBUS peripheral bus 1080.

Various other peripherals may be attached to the QBUS 1080. For example, various storage devices, such as disks 1070, a tape storage device 1090, and a CD ROM 1110 may also be connected to the QBUS 1080. Other peripherals, such as various extra terminals 1100 may be connected to the QBUS 1080. Finally, an ethernet 1120 may be connected to the QBUS 1080. The ethernet 1120 may be used to interconnect the data processing system 1000 shown in Fig. 1 with various other data processing systems (not shown).

The memory 1030, the disks 1070, the tape 1090, and the CD ROM 1110 are examples of data storage devices which may be used by the data processing system shown in Fig. 1. Of course, number and size of these data storage peripherals will be determined by the desired applications of the data processing system.

The extra terminals 1100 shown in Fig. 1 may be used by various users of the data processing system. The type, number and function of the extra terminals 1100 will, of course, be determined by the number of users and the functions which the users may desire.

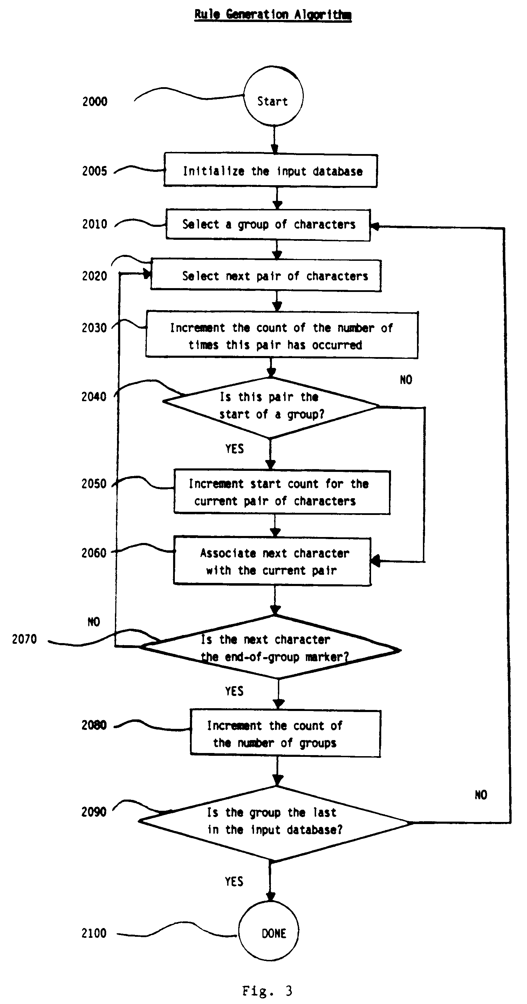

Referring now to Fig. 3, an algorithm for generating a rules database is shown. The rules database will be used to generate passwords in the preferred embodiment, as described below, and is a compilation of data relating to the content and organization of an input database. The input database may include, for example, a text sample of a written language, or a compilation of words from a written language. In the preferred embodiment, the input database is a dictionary of a written language. The dictionary most preferably contains at least about 47,000 words, and less preferably at least about 1000 words.

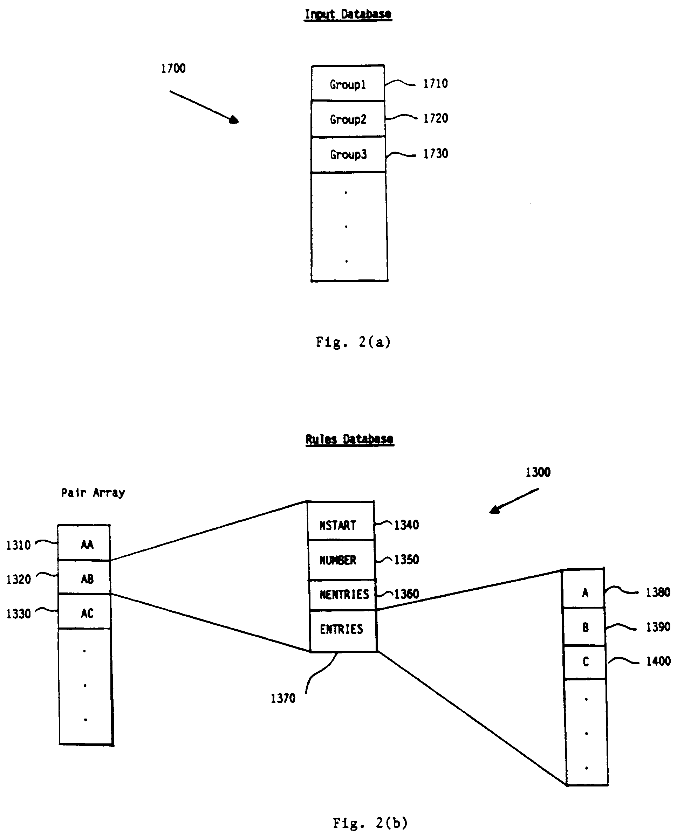

Referring now to Fig. 2(a), a preferred data structure for an input database 1700 is shown. The input database 1700 includes element "Group1" 1710, element "Group2" 1720, element "Group3" 1730, and other elements not shown. It should be understood that the input database 1700 may be conveniently stored in the memory 1030 of the system shown in Fig. 1, or any other data storage device shown in Fig. 1.

In overview, a data processing system utilizing the rule generation algorithm of the present invention removes a group of characters from the input database, processes the group of characters, and stores the results in a rules database. This procedure is then preferably repeated to enlarge the rules database.

The following description, in conjunction with Fig. 3, will demonstrate the rule generation algorithm of the present invention by processing a specific English language word. It should be understood, however, that the rule generation algorithm of the present invention is not limited to a written English word, but may be used to process any group of input character data. The input database may include, for example, groups of characters such as text samples or dictionaries in such languages as French, Spanish, Russian, or others.

In fact, the rule generation algorithm of the present invention also may be used to process groups of Asian language characters. For example, the input database may contain Japanese Kanji characters or Japanese Hiragana characters. Because Japanese Kanji characters most nearly represent English words, a group of Kanji characters would most nearly correspond to an English sentence.

Of course, the input database should store the various groups of characters in a format which is easily manipulated by the system of the present invention. For most conventional languages, an eight bit storage format, such as ASCII, may be used to represent the various characters. However, for Asian characters a sixteen bit storage format may be necessary. Other storage formats may be used, such as a 24 bit format or a 32 bit format.

Referring now to Fig. 3, the rule generation algorithm begins with the start step 2000. It will be understood that the steps of Fig. 3 are performed by MicroVAX II 1060 of Fig. 1 executing instructions (not shown) stored in memory 1030 or some similar memory for storing instructions.

In step 2005, the process initializes the input database. The preferred embodiment of the rule generation algorithm first reads and modifies the entire input database so that the input database is in a format which is easily manipulated by the system of the present invention. Most preferably, the entire input database is converted to a lower case character format, any extraneous punctuation is deleted, and an end-of-group marker is inserted immediately following each group of characters. The end-of-group marker may be a character, for example, such as a period.

A group of characters is then selected in step 2010. By way of example and for purposes of explanation, assume that the English language word "SAMPLE" is the group of characters selected in 2010.

After a group of characters is selected in step 2010, a "next" pair of characters is selected from the group of characters in step 2020. In the example, the next pair of characters is the first two characters of the word "SAMPLE." Therefore, the pair "SA" is selected in step 2020.

A running count of the total number of times each possible pair of characters occurs is stored in the rules database. Therefore, in step 2030, the count of the number of times the selected pair has occurred is incremented. In the example, a count of the number of times the pair "SA" has occurred is incremented from an initial value of "0" to "1."

The rules database also contains a running total of the number a times a pair of characters begins a group of characters. In step 2040, the rule generation algorithm tests whether the pair was the start of the group. If the pair was not the start of the group, the process proceeds from step 2040 to step 2060. If the pair was the start of the group, the process proceeds from step 2040 to step 2050. In the example, because the pair "SA" was the start of the group of characters, a start count for the pair of characters "SA" is incremented from an initial value of "0" to "1" in step 2050.

The rules database also contains a list of characters which follow each pair of characters in the input database. The list of characters is formed by associating the next character in the group with the current pair of characters in step 2060. The "current pair" of characters represents the pair of characters which the process is currently processing. In the example, the next character, "M," is associated with the current pair, "SA," in the rules database.

In the preferred embodiment, an end-of-group marker previously has been attached to the end of each group in step 2005. The end-of-group marker may be simply another character, such as a ".", which follows the last character in the group. It should be understood that the end-of-group marker may be inserted into the input database before the rule generation algorithm is implemented, or may be inserted at the beginning of the rule generation algorithm.

In step 2070, the processor determines whether the next character after the selected pair of characters is an end-of-group marker. If the next character is not an end-of-group marker, the process returns to step 2020. If the next character is an end-of-group marker, the process proceeds to step 2080. In the example, the next character, "M" is not an end-of-group marker and therefore the process returns to step 2020. In step 2020, the process selects the next pair of characters. In the example, the next pair of characters is "AM."

In step 2030, the count of the number of times the pair has occurred is incremented. In the example, since the pair "AM" has not yet occurred. Therefore, the count of the number of times the pair "AM" has occurred is incremented from an initial value of "0" to "1."

Next, the processor determines whether the current pair is the start pair of a group in step 2040. In the example, the pair "AM" is not the start pair of the group "SAMPLE", and therefore, the process proceeds to step 2060. In step 2060, the next character is associated with the current pair of characters. In the example, the next character "P" is associated with the current pair "AM."

In step 2070, the processor determines whether the next character is the end-of-group marker. In the example, because the next character "P" is not an end-of-group marker, the process returns to step 2020.

In the example, the processor continues in a similar fashion for each following pair of characters ("MP," "PL," and "LE").

When the processor determines in step 2070 that the next character is the end-of-group marker, the process proceeds to step 2080 where a count of the number of groups processed is incremented by "1." In the example, because the word "SAMPLE" was the first group of characters processed, the count of the number of groups is incremented from "0" to "1."

Next, the rule generation algorithm determines whether the character group most recently processed is the last group in the input database. If the most recent group of characters is not the last group in the input file, the process proceeds to step 2010. If the most recent group is the last group in the input file, the process proceeds to step 2100 and processing is complete.

If, in the example, the group of characters "SAMPLE" is the only group of characters in the input database, then the process proceeds to step 2100 and ends. However, in the example, if other groups of characters remain to be processed in the input database, the process will proceed from step 2090 to step 2010 to process the next group of characters.

The processor continues to generate data for storage in the rules database as described above until each group in the input database has been processed.

In the preferred embodiment of the present invention, the information generated in the rule generation algorithm is stored in one or more arrays. Most preferably, the rule generation algorithm generates a main table in an array which is indexed by a string representing each pair of characters. For each pair of characters, there is a second array which contains the following elements: NSTART, NUMBER, NENTRIES, and ENTRIES.

Referring now to Fig. 2(b), a preferred data structure for the rules database 1300 is shown. A Pair Array includes array elements "AA" 1310, "AB" 1320, "AC" 1330, and other elements not shown. For each array element of the Pair Array, a second array is shown in Fig. 2(b) which includes the array elements of "NSTART" 1340, "NUMBER" 1350, "NENTRIES" 1360, and "ENTRIES" 1370.

The "ENTRIES" 1370 element is also an array. As shown in Fig. 2(b), the ENTRIES array includes the elements "A" 1380, "B" 1390, "C" 1400, and other elements not shown. It should be understood that the rules database 1300 may be conveniently stored in the memory 1030 of the system shown in Fig. 1, or any other data storage device shown in Fig. 1.

The element NSTART contains the total number of times that a particular pair occurred in the input database as the initial pair of a group and is incremented in step 2050 of Fig. 3.

The element NUMBER contains the total number of times that a particular pair of characters occurred in the input database and is incremented in step 2030 of Fig. 3.

The element NENTRIES is the number of characters that may follow each pair of characters. NENTRIES contains the number of characters that are associated with each pair. Various pairs may have different numbers of characters associated with them.

In the preferred embodiment, the element ENTRIES is a separate array which is indexed by an integer. The integer is used in the preferred embodiment to represent a character according to a predetermined lookup table. The lookup table is a list of predetermined characters which may be recognized by the system with each predetermined character being represented by an integer.

In the preferred embodiment, the rules database also contains an index representing the total number of pairs of characters stored in the database. The following table represents the pairs of characters and the associated information stored in the rules database for the above-described example wherein the word "SAMPLE" was processed by the rule generation algorithm.

TABLE 1

| CHARACTER PAIR | NSTART | NUMBER | NENTRIES | ENTRIES |
|---|---|---|---|---|
| SA | 1 | 1 | 1 | (M) |
| AM | 0 | 1 | 1 | (P) |
| MP | 0 | 1 | 1 | (L) |
| PL | 0 | 1 | 1 | (E) |
| LE | 0 | 1 | 1 | (end-of-group) |

The previous discussion of the preferred rule generation algorithm generated a rule database by manipulating the characters in pairs. However, the present invention in its broader aspects should not be so limited. Alternative embodiments of the present invention broadly manipulate characters in subgroups of characters. Such subgroups may comprise 3 or 4 characters, for example. Similarly, the following discussion of the preferred group generation algorithm also refers to pairs of characters for ease of explanation. Alternative embodiments of the group generation algorithm also broadly manipulate characters in subgroups.

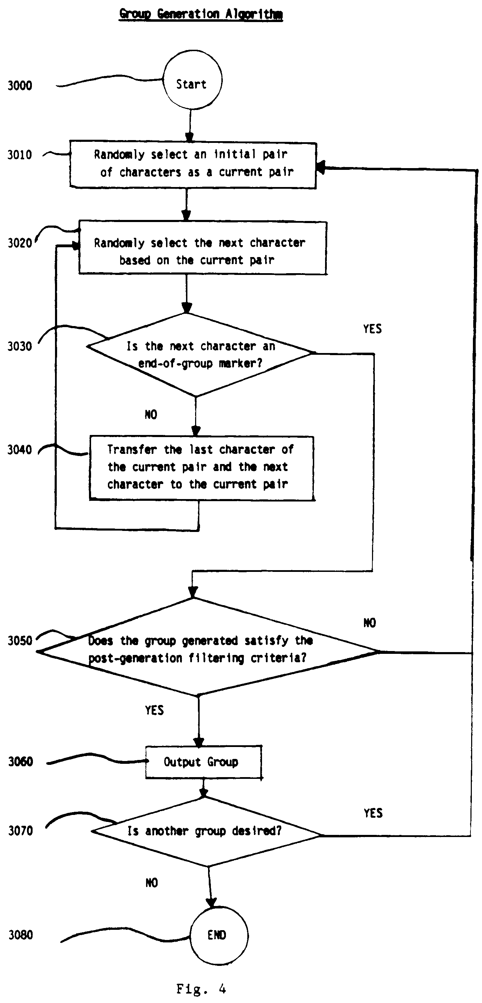

After the rules database has been generated, the information contained in the rules database may be used by a group generation algorithm to generate random groups of characters. Referring now to Fig. 4, a group generation algorithm according to the present invention is shown. The steps of Fig. 4 are preferably performed by processor 1060 executing instructions (not shown) stored in a memory 1030 or in some other suitable memory.

Step 3000 starts the group generation algorithm and proceeds to step 3010. In step 3010, the processor randomly selects an initial pair of characters as a current pair. The "current pair" of characters represents the pair of characters which the processor is currently processing.

In the preferred embodiment, the processor selects an initial pair which has a nonzero NSTART entry in the rules database. Further, the likelihood that the process will select a particular initial pair is based upon the number of times that pair began a group of characters in the input database. Therefore, the larger the NSTART value associated with a particular pair, the more likely that that particular pair will be selected by the processor. Any character pair with a nonzero NSTART value may be selected at any time. It is, however, more likely that frequently occurring pairs will be selected.

The process then proceeds to step 3020 to randomly select a next character based upon the current pair of characters. In the preferred embodiment, the process selects the next character from the ENTRIES array for the selected pair at random. The process selects the next character from the list of possible next characters contained in the ENTRIES array under the current pair.

The process preferably performs a linear search through the possible pairs of characters in the rules database to find the current pair of characters. Further, the likelihood that the process will select an particular next character is based upon the number of times that character followed the current pair in the input database. Each selected pair has NENTRIES possible next characters.

The process then proceeds to step 3030 to determine whether the selected next character is an end-of-group marker. If the next character is an end-of-group marker, the process proceeds to step 3050. If the next character is not an end-of-group marker, the process proceeds to step 3040.

In step 3040, the last character of the current pair selected in step 3010 and the next character selected in step 3020 are transferred to the current pair.

Next, the process returns to step 3020 wherein a new next character is selected based on the new current pair.

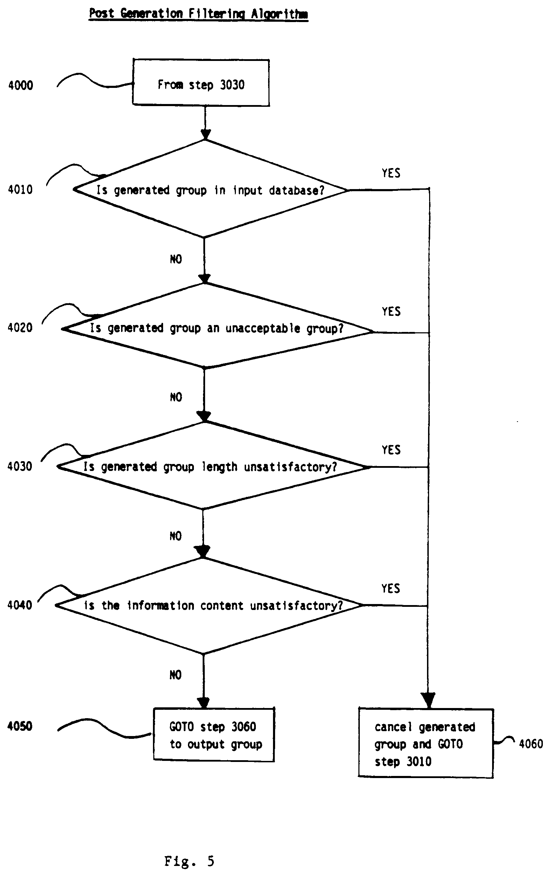

Step 3020, step 3030, and step 3040 are successively performed until the next character is an end-of-group marker. When this occurs, a complete group of characters has been generated. The process then proceeds to step 3050 where the complete group of characters is tested against one or more post-generation filtering criteria. The various post-generation filtering criteria will be explained further with reference to Fig. 5.

If the group satisfies the post-generation filtering criteria, the process proceeds to step 3060 to output the group. If the group does not satisfy the post-generation filtering criteria, the process returns to step 3010 to begin the previously discussed process.

In the preferred embodiment, the post-generation filtering criteria may be selected by the user. Additionally, if a set of criteria are selected which are difficult or impossible to satisfy, the preferred embodiment will stop generating groups after a predetermined number of attempts and output an appropriate error message to the user.

After a group has been generated which satisfies the post-generation filtering criteria in step 3060, the process determines whether another group should be generated. If another group is desired, the process returns to step 3010. If another group is not desired, the process proceeds to step 3080 and ends.

In the preferred password generating embodiment, typically the user will determine whether the word generated is an acceptable password. If the user determines that the word generated is not acceptable, the user will cause the process to generate another word for consideration.

Following is a step-by-step example of a group generation algorithm according to the present invention using an actual rules database. The information contained in the rules database for this example is shown in Table 2 below:

TABLE 2

| PAIR | NSTART | NUMBER | NENTRIES | ENTRIES |
|------|--------|--------|----------|---------|
| SA | 1 | 1 | 1 | (L) |
| AL | 0 | 3 | 3 | (T,E,.) |
| LT | 0 | 1 | 1 | (.) |
| WH | 1 | 1 | 1 | (A) |
| HA | 0 | 1 | 1 | (L) |
| LE | 1 | 2 | 2 | (G,.) |
| EG | 0 | 1 | 1 | (A) |
| GA | 1 | 2 | 2 | (L,R) |
| AR | 0 | 2 | 2 | (L,B) |
| RL | 0 | 1 | 1 | (I) |
| LI | 0 | 1 | 1 | (L) |
| IC | 0 | 1 | 1 | (.) |
| BA | 1 | 1 | 1 | (R) |
| RB | 0 | 1 | 1 | (.) |

The rules database represented by Table 2 was derived by implementing the previously discussed rule generation algorithm on five English language words. The five English language words in the example input database are SALT, WHALE, LEGAL, GARLIC, and BARB.

As discussed above, the left-most column "PAIR" lists each pair of letters present in the input database. The NSTART column lists the number of times each pair of letters begins a word. The NUMBER column indicates the total number of occurrences of each pair of letters. The NENTRIES column contains a number of entries in each element of the ENTRIES column. The ENTRIES column lists every letter which follows a pair of letters in the rules database. A period has been used to indicate an end-of-word marker.

Referring now to Fig. 4 and Table 2, from the start step 3000, the processor randomly selects an initial pair of characters as the current pair in step 3010. Therefore, the processor will select one of the pairs SA, WH, LE, GA, or BA, all of which were initial pairs of letters in the words in the input database. Because each of the initial pairs of characters has occurred once in the input database as shown in the NSTART column, each pair will have an equal chance of being randomly selected by the process. If, however, one or more of the initial pairs of letters occurred more often, the likelihood of selection would be proportionally weighted. For purposes of this example, assume that the letter pair SA was randomly selected by the processor.

The processor then proceeds to step 3020 to select the next character based on the current pair "SA". In this example, because of the small size of the input database, the next character selected by the process must be an "L," as shown in the ENTRIES column associated with the pair "SA."

In step 3030, the process determines whether the next character is an end-of-group marker. Because the next character is an "L," the process proceeds to step 3040 wherein the last character of the current pair and the next character are transferred to the current pair. In the example, the last character of the current pair, "A," and the next character, "L," are transferred to the current pair, thereby making the current pair "AL."

The process then returns to step 3020 wherein the next character is selected based upon the current pair "AL." The process then randomly selects either a "T," a "E," or an end-of-group marker (.) from the ENTRIES column associated with the pair "AL." Each of the possible next characters, "T," "E," or end-of-group marker (.), will have an equal chance of being selected by the process because each entry occurred an equal number of times in the input database. If one or more of the entries associated with the current pair occurred more than once in the input database, the likelihood of selection would be adjusted accordingly.

The processor continues in a similar fashion until an end-of-group marker is reached in step 3030. Table 3 below summarizes the example group generation algorithm.

TABLE 3

| CURRENT PAIR | NEXT CHARACTER SELECTED | NEW CURRENT PAIR | GROUP |
|---|---|---|---|
| SA | L | AL | SAL . . . |
| AL | E | LE | SALE . . . |
| LE | G | EG | SALEG . . . |
| EG | A | GA | SALEGA . . . |
| GA | R | AR | SALEGAR . . . |
| AR | B | RB | SALEGARB . . . |
| RB | . | - | SALEGARB. |

As can be seen in the last entry in the GROUP column, the word generated randomly by the algorithm is "SALEGARB." The processor then proceeds to step 3050 to determine whether "SALEGARB" satisfies the post-generation filtering criteria, which will be discussed later with reference to Fig. 5. Assuming that "SALEGARB" does satisfy the post-generation filtering criteria, the processor proceeds to step 3060 to output the word "SALEGARB." If no other group is desired, the processor proceeds to step 3080 and ends.

Referring now to Fig. 5, the post-generation filtering algorithm of the preferred embodiment is shown. Fig. 5 shows a series of substeps which may be implemented in step 3050 of Fig. 4. Accordingly, in Fig. 5, step 4000 receives the process flow from step 3050 in Fig. 4, step 4050 in Fig. 5 returns the flow to step 3060 in Fig. 4, and step 4060 in Fig. 5 returns the process flow to step 3010 in Fig. 4. The post-generation filtering algorithm is preferably embodied by processor 1060 executing instructions stored in memory 1030 or some other suitable memory.

From step 4000, the post-generation filtering algorithm proceeds to step 4010 where the processor determines whether the generated word is included in the input database. If the generated word is included in the input database, the process proceeds to step 4060 where the process cancels the generated group and then returns to step 3010 in Fig. 4. If the generated group is not in the input database, the process proceeds to step 4020.

In the preferred password generating embodiment, it is undesirable to output groups which are contained in the input database because such words probably are not secure. Generally, the words in the input database are commonly known and/or used. An unauthorized user with access to an automatic system for guessing passwords, for example, may easily guess a password contained in the input database.

In step 4020, it is determined whether the generated group is an unacceptable group. If the generated group is an unacceptable group of characters, the process proceeds to step 4060. If the generated group of characters is not an unacceptable group, the process proceeds to step 4030.

In the preferred password generating embodiment, in step 4020, the processor will compare the generated group with a list of unacceptable subgroups. For example, the list of unacceptable subgroups may include vulgar words. In particular, the processor determines if any vulgar word is imbedded within the generated group.

Also, the list of unacceptable subgroups may include words which may be easily guessed by an unauthorized user because such words may be associated with the particular data processing system. For example, words that may be easily guessed are those such as the name of the entity owning the data processing system, the user's name, etc.

In step 4030, the processor determines whether the generated group length is satisfactory. If the generated group of characters is unsatisfactory in length, the process proceeds to step 4060. If the generated group of characters is satisfactory in group length, the process proceeds to step 4040.

In the preferred embodiment, a system manager, or the like, may select a minimum or maximum number of characters which will be output by the group generation algorithm. Step 4030 simply determines whether the minimum or maximum requirements have been satisfied by the group of characters.

In step 4040, the processor determines whether the information content of the generated group of characters is unsatisfactory. If the information content is unsatisfactory, the process proceeds to step 4060. If the information content of the generated group is satisfactory, the process proceeds to step 4050 and then returns to step 3060 of Fig. 4 to output the group of characters.

The information content of a generated group of characters relates to the randomness of the generated group. Therefore, in the preferred password generating embodiment, the information content is related to the likelihood that an unauthorized user could randomly guess a particular generated password.

In the preferred password generating embodiment, the information content is a function of the probability of a word being generated from a given rules database. For example, assuming an equal chance exists for generating one of eight possible groups of characters from a given rules database, the probability that any one of the set of groups of characters may be generated is 1/8. The information content of a word may be conveniently expressed by the following mathematical expression:

Information Content = $LOG_2$ $(1/\sigma)$

where $\sigma$ is the overall probability that a group of characters will be generated. Therefore, in the previous example where $\sigma$ = 1/8, the information content = $LOG_2$ (8) = 3.

However, it should be understood that the information content for each word for a group of characters generated will generally vary from group to group depending upon the characters which have been randomly generated and the number of characters generated for each group.

Most preferably, the information content of each generated group of characters is determined during execution of the group generation algorithm. The information content is determined at each selection step of the group generation algorithm, namely step 3010 and step 3020 in Fig. 4.

Referring to Fig. 4, during step 3010 (where an initial pair of characters is randomly selected) the information content corresponding to the initial pair is calculated by processor 1060. During step 3020 (where the next character of the group is selected based on the current pair of characters) the information content corresponding to the next character selected is calculated. Further, as each next character is added to the generated group, an intermediate information content is calculated for the partial group of characters.

In the specific implementation of the preferred embodiment, the process calculates the probability relating to the selection of an initial pair and the addition of each next character to the group and takes the base two logarithm of the reciprocal of these probabilities. Then, each time a next character is added to the group of characters, the logarithm of the probability is simply added to the sum of the previous logarithm values. The addition of logarithm values is preferred because it may be efficiently and quickly performed by the process.

In other words, the information content may be derived from the following expression:

$$\text{Information Content} = \text{LOG}_2 (1/P) + \Sigma \, \text{LOG}_2 (1/\rho)$$

where P is the probability of selecting the initial pair of the group, $\rho$ is the probability associated with each additional next character, and the summation is over the every next character added in the group.

Because the information content is calculated using a base two logarithm, the information content is representative of the number of bits required to express the generated group. Preferably, the information content should be at least 24 to ensure adequate randomness of password generation.

Furthermore, the specific implementation of the preferred password generating embodiment mandates a minimum value of .1 for each of the addends of the previous equation. In other words, it is assumed that each character adds a minimum of .1 to the total information content of the generated word. This assumption is made because each additional character increases the difficulty of guessing the password, and because in the specific implementation, the information content is disregarded after the tenths decimal place.

In an alternative embodiment relating to a random file name generator, the post-generation filtering criteria may include a determination as to whether the generated group meets predetermined requirements for file names. The file name requirements are generally determined by the particular data processing systems in which the generated file names are to be used.

The foregoing descriptions of preferred embodiments of the invention has been presented for purposes of illustration and description. They are not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to use the invention in various embodiments and with various modifications as are suited to the particular use contemplated. It is intended that the scope of the invention be defined by the claims appended hereto, and their equivalents.

## Claims

1. A method for generating a rules database by processing an input database in a data processing system, the input database containing a plurality of groups of characters, said method comprising the steps of:

   selecting a subgroup of consecutive characters from a group of characters stored in the input database;

   incrementing a value stored in the rules database that represents a number of times said subgroup begins a group of characters if said selected subgroup is the initial subgroup in said group;

   incrementing a value stored in the rules database that represents a number of times said subgroup has occurred;

   storing a character in said group that follows said subgroup, in a list of characters that may follow said subgroup, said list being stored in the rules database; and

   incrementing a value stored in the rules database that represents a number of times said character follows said subgroup.

2. The method of claim 1, further comprising the step of selecting a second subgroup of consecutive characters from said group stored in the input database if said character that follows said subgroup is not an end-of-group marker.

3. The method of claim 1, further comprising the step of incrementing a value stored in the rules database representing a number of groups in the input data base if said character that follows said pair is an end-of-group marker.

4. The method of claim 1, further comprising the step of incrementing a value stored in the rules database representing a number of unique subgroups contained in said input database if said subgroup selected in said selecting step has not been selected before.

5. The method of claim 1, wherein said subgroup of characters consists of a pair of characters, said pair consisting of a first character and a second character.

6. The method of claim 5, further comprising the step of selecting a second pair of characters from said group stored in the input database, said second pair consisting of said second character and said character that follows said pair.

7. The method of claim 5, wherein the value representing the number of times said pair begins a group of characters is stored in a first array in the rules database and wherein the value associated with the number of times said pair has occurred is stored in a second array in the rules database.

8. A method in a data processing system for adding a character to a group of characters based upon a rules database, said method comprising the steps of:
   reading a current subgroup of characters in the group of characters;
   selecting a next character from one of a plurality of lists of possible next characters, each list being associated with a unique subgroup of characters, wherein said list is associated with said current subgroup of characters; and
   adding said selected next character to the group of characters.

9. The method of claim 8, further comprising the step of reading a new current subgroup of characters, said new current subgroup of characters including said next character.

10. The method of claim 8, further comprising the step of selecting an initial subgroup of characters from a list of initial subgroups of characters stored in the rules database.

11. The method of claim 8, wherein said next character is selected based upon a likelihood of occurrence stored in the rules database.

12. The method of claim 8, wherein said selecting step selects a next character representing an end-of-group market, signifying an end of the generation of a group of characters is completed.

13. The method of claim 8, wherein said subgroup of characters consists of a pair of characters, said pair consisting of a first character and a second character.

14. The method of claim 13, further comprising the step of reading a new current pair of characters, said new current pair of characters including said second character and said next character.

15. The method of claim 13, further comprising the step of selecting an initial pair of characters from a list of initial pairs of characters stored in the rules database.

## System Configuration

1000

| | | |
|---|---|---|
| 1030 | Memory | MicroVAX II 1060 |

1050 — memory interconnect

1080 QBUS

1070 — Disks (RD54)

1005 — screen (VR260)

1090 — Tape (TK50)

1010 — keyboard (LK201)

1100 — Extra terminals (DHV11)

1020 — mouse (VSXXX)

1110 — CD ROM (RRD50)

1040 — QDSS video controller

1120 — ethernet (DELQA)

Fig. 1

Input Database

1700

| |
|---|
| Group1 ── 1710 |
| Group2 ── 1720 |
| Group3 ── 1730 |
| . |
| . |
| . |

Fig. 2(a)

Rules Database

1300

Pair Array

| |
|---|
| 1310 ── AA |
| 1320 ── AB |
| 1330 ── AC |
| . |
| . |
| . |

| |
|---|
| NSTART ── 1340 |
| NUMBER ── 1350 |
| NENTRIES ── 1360 |
| ENTRIES |

1370

| |
|---|
| A ── 1380 |
| B ── 1390 |
| C ── 1400 |
| . |
| . |
| . |

Fig. 2(b)

14

### Rule Generation Algorithm

2000 — ( **Start** )

2005 — Initialize the input database

2010 — Select a group of characters

2020 — Select next pair of characters

2030 — Increment the count of the number of times this pair has occurred

2040 — Is this pair the start of a group?  → NO

YES

2050 — Increment start count for the current pair of characters

2060 — Associate next character with the current pair

2070 — Is the next character the end-of-group marker?  NO

YES

2080 — Increment the count of the number of groups

2090 — Is the group the last in the input database?  → NO

YES

2100 — ( **DONE** )

Fig. 3

15

## Group Generation Algorithm

```
3000 ——————○ Start

3010 ——————┌──────────────────────────────┐
            │ Randomly select an initial pair│
            │ of characters as a current pair│
            └──────────────────────────────┘

3020 ——————┌──────────────────────────────┐
            │ Randomly select the next       │
            │ character based on the current │
            │ pair                           │
            └──────────────────────────────┘

3030 ——————◇ Is the next character an      ◇  YES
            end-of-group marker?

            NO

3040 ——————┌──────────────────────────────┐
            │ Transfer the last character of │
            │ the current pair and the next  │
            │ character to the current pair  │
            └──────────────────────────────┘

3050 ——————◇ Does the group generated satisfy the ◇  NO
            post-generation filtering criteria?

            YES

3060 ——————┌ Output Group ┐

3070 ——————◇ Is another group desired? ◇  YES

            NO

3080 ——————○ END
```

Fig. 4

## Post Generation Filtering Algorithm

4000 — From step 3030

4010 — Is generated group in input database? — YES

NO

4020 — Is generated group an unacceptable group? — YES

NO

4030 — Is generated group length unsatisfactory? — YES

NO

4040 — Is the information content unsatisfactory? — YES

NO

4050 — GOTO step 3060 to output group

4060 — cancel generated group and GOTO step 3010

Fig. 5

17